# EUROPEAN PATENT APPLICATION

(11) **EP 1 990 664 A2**
(43) Date of publication of application: **12.11.2008**
(21) Application number: 08008269.6
(22) Date of filing: 30.04.2008
(51) Int. Cl.: G02B 6/132

(54) **Manufacturing method of optical waveguide**

(30) Priority: 08.05.2007 JP 2007123830
(71) Applicant: NITTO DENKO CORPORATION, Ibaraki-shi, Osaka 567-8680 (JP)
(72) Inventor: Shimizu, Yusuke, Ibaraki-shi Osaka 567-8680 (JP)
(74) Representative: Kuhnen & Wacker

(57) **Abstract**

method of manufacturing an optical waveguide including the steps of forming a core (3) on a surface of an under cladding layer (2), and forming an over cladding layer (4) on a surface of the core, in which the step of forming the over cladding layer includes preparing a molding die (10) formed with a recessed portion (11) having a die surface (11a) conformable in shape to a surface of the over cladding layer and a through hole (12) in communication with the recessed portion: bringing an open surface of the recessed portion into close contact with the surface of the under cladding layer; while keeping this state, pouring a liquid resin which is a material for forming the over cladding layer through the through hole into a mold space surrounded by the die surface of the recessed portion and the surface of the under cladding layer; and hardening the liquid resin.

## Description

### BACKGROUND OF THE INVENTION

### Filed of the Invention

The present invention relates to a manufacturing method of an optical waveguide for widespread use in optical communications, optical information processing, and other general optics.

### Description of the Related Art

An optical waveguide is incorporated in an optical device such as an optical waveguide device, an optical integrated circuit or an optical wiring board, and is widely used in the field of optical communications, optical information processing, and other general optics. In general, the optical waveguide includes a core serving as a passageway for light and formed in a predetermined pattern, and an under cladding layer and an over cladding layer formed so as to cover the core (see, for example, Japanese Patent Application Laid-Open No. 2005-165138).

For the formation of the core, the under cladding layer and the over cladding layer in a predetermined pattern, photosensitive resins are generally used as materials for the respective formation thereof. For the respective formation thereof, steps of coating, exposure to light, development, and drying of each of the photosensitive resins therefor are carried out.

However, the execution of the steps of coating, exposure to light, development, and drying for each of the processes of forming the core, the under cladding layer, and the over cladding layer described above requires a large number of processing steps to result in the increase in manufacturing cost. Above all, each of the steps of exposure to light and development includes a large number of substeps. In this regard, there is room for improvement.

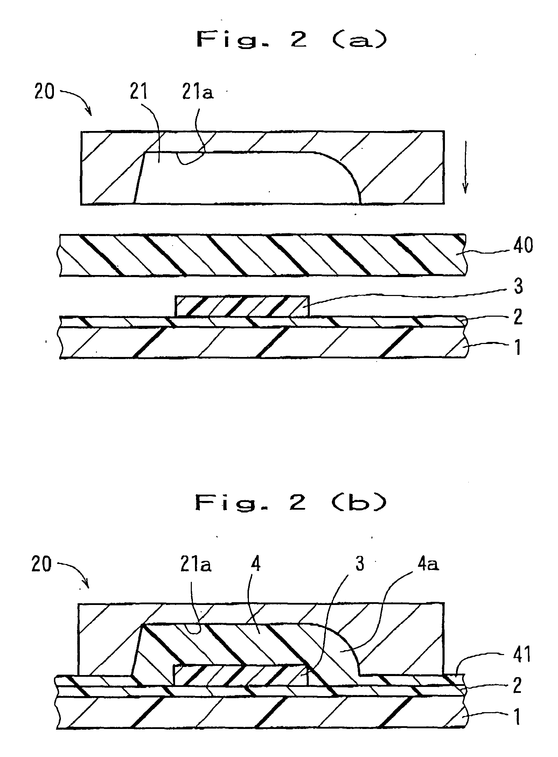

To reduce the number of processing steps, for example, a method of die-molding the over cladding layer in a manner to be described below is typically conceivable. Specifically, as shown in Fig. 2(a), an under cladding layer 2 and a core 3 are formed sequentially on a substrate 1. Then, a molding die 20 is prepared which is formed with a recessed portion 21 having a die surface 21a conformable in shape to the surface of an over cladding layer 4 (see Fig. 2(b)). Also, a thermosetting resin sheet 40 is prepared as a material for the formation of the over cladding layer 4. Next, the thermosetting resin sheet 40 is positioned over the under cladding layer 2 and the core 3. As shown in Fig. 2(b), the thermosetting resin sheet 40 is pressed over the under cladding layer 2 by using the molding die 20, and heated in this state to harden, thereby forming the over cladding layer 4. Thereafter, the die is removed. The formation of the over cladding layer 4 by employing this method eliminates the need for the steps of coating, exposure to light, development, and the like, thereby reducing the number of processing steps and the cost required for the formation of the over cladding layer 4.

However, the method of pressing the thermosetting resin sheet 40 by using the molding die 20 is prone to produce flash 41 at the edge of the formed over cladding layer 4 because the thermosetting resin sheet 40 is sandwiched between the under cladding layer 2 and the molding die 20. This necessitates the step of removing the flash 41, which results in insufficiency of reduction in the number of processing steps and cost reduction. Furthermore, when a portion of the over cladding layer 4 corresponding to a tip of the core 3 has a lens-shaped configuration (a curved surface) 4a as shown, the flash 41, if any, at an end of the portion having the lens-shaped configuration 4a causes failure in collection of light and the like.

### SUMMARY OF THE INVENTION

In view of the foregoing, it is therefore an object of the present invention to provide a manufacturing method of an optical waveguide which is capable of achieving reduction in the number of processing steps for manufacture of the optical waveguide and reduction in manufacturing cost without producing any flash during the formation of an over cladding layer.

To accomplish the object, a manufacturing method of an optical waveguide according to the present invention is a method of manufacturing an optical waveguide by forming a core in a pattern on a surface of an under cladding layer, and forming an over cladding layer on a surface of the core by coating, wherein the formation of the over cladding layer is accomplished by preparing a molding die formed with a recessed portion having a die surface conformable in shape to a surface of the over cladding layer and a through hole in communication with the recessed portion, bringing an open surface of the recessed portion of the molding die into close contact with the surface of the under cladding layer, and while keeping this state, pouring a liquid resin which is a material for the formation of the over cladding layer through the through hole into a mold space surrounded by the die surface of the recessed portion and the surface of the under cladding layer, and then hardening the liquid resin.

In the manufacturing method of the optical waveguide according to the present invention, the formation of the over cladding layer is accomplished by preparing the molding die formed with the recessed portion having the die surface conformable in shape to the surface of the over cladding layer and the through hole in communication with this recessed portion, bringing the open surface of the recessed portion of the molding die into close contact with the surface of the under cladding layer, and while keeping this state, pouring the liquid resin which is the material for the formation of the over cladding layer through the through hole into the mold space surrounded by the die surface of the recessed portion and the surface of the under cladding layer, and then hardening the liquid resin. Accordingly, no flash is produced during the formation of the over cladding layer. Additionally, the formation of the over cladding layer, which is accomplished by die-molding, eliminates the need for the step of development and the like after exposure. This reduces the number of processing steps, and consequently achieves manufacturing cost reduction.

### BRIEF DESCRIPTION OF THE DRAWINGS

Figs. 1(a) to 1(e) are diagrams schematically illustrating a preferred embodiment of a manufacturing method of an optical waveguide according to the present invention; and
Figs. 2(a) and 2(b) are diagrams schematically illustrating a related manufacturing method of an optical waveguide.

### DESCRIPTION OF THE PREFERRED EMBODIMENT

A preferred embodiment according to the present invention will now be described in detail with reference to the drawings.

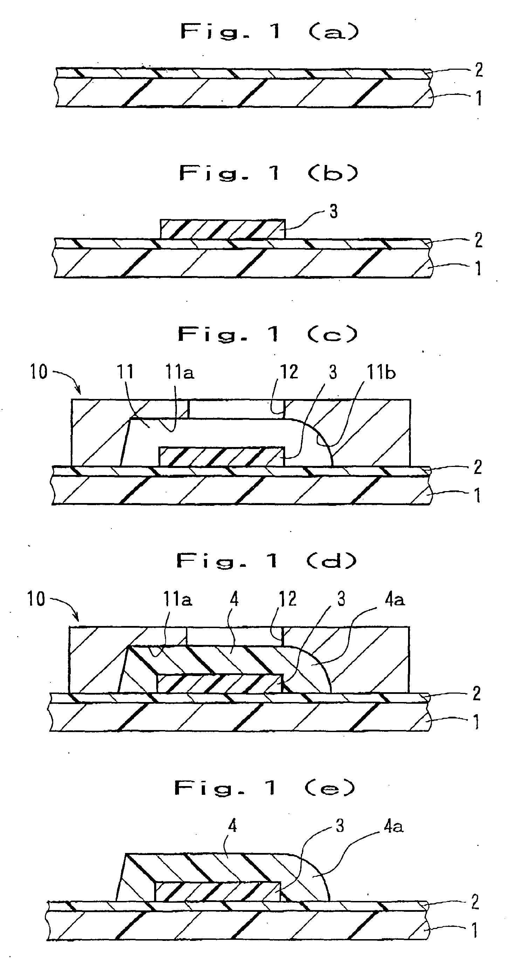

Figs. 1(a) to 1(e) show one preferred embodiment of a manufacturing method of an optical waveguide according to the present invention. In manufacturing the optical waveguide (see Fig. 1(e)) including an under cladding layer 2, a core 3, and an over cladding layer 4 subsequently layered on the surface of a substrate 1. in this preferred embodiment, the formation of the over cladding layer 4 is accomplished by casting (die-molding) using a molding die 10 having a through hole 12 for pouring therethrough a liquid resin as a material for the formation thereof (see Figs. 1(c) and 1(d)). This is a characteristic feature of the present invention.

Examples of the liquid resin serving as the material for the formation of the over cladding layer 4 include photosensitive resin, polyimide resin and epoxy resin. Since the liquid resin is poured through the through hole 12 formed in the molding die 10 into a mold space, the viscosity of the liquid resin is preferably set in the range of 100 to 2000 mPa·s.

The molding die 10 for use in the die-molding is formed with a recessed portion 11 having a die surface 11a conformable in shape to the surface of the over cladding layer 4. In the formation of the over cladding layer 4, an open surface of the recessed portion 11 is brought into close contact with the surface of the under cladding layer 2, whereby a space surrounded by the die surface 11a of the recessed portion 11 and the surface of the under cladding layer 2 is defined as the mold space. The molding die 10 is also formed with the through hole 12 for pouring of the liquid resin therethrough into the mold space, the through hole 12 being in communication with the recessed portion 11. Additionally, a portion 11b of the die surface 11a of the recessed portion 11 corresponding to a tip of the core 3 is configured in the form of a lens-shaped curved surface in this preferred embodiment. The dimensions of the molding die 10 depend on the size of the over cladding layer 4, and are not particularly limited. However, the thickness of the molding die 10 is set in the range of the order of 2 to 5 mm. The opening shape of the through hole 12 is not particularly limited. The opening shape may be, for example, rectangular or circular. The size of the through hole 12 is not particularly limited. However, where the opening shape is rectangular, the size of the through hole 12 is set in the range of approximately 50 mm to 100 mm x 100 mm to 1000 mm.

For the formation of the over cladding layer 4 with using the liquid resin for the formation of the over cladding layer 4 and the molding die 10, the hardening of the liquid resin filled in the mold space is accomplished, which will be described in detail later. The hardening is accomplished, for example, by performing an exposure to radiation such as ultraviolet radiation through the molding die 10 followed by a heat treatment where a photosensitive resin is used as the material for the formation of the over cladding layer 4. Whereas, where a polyimide resin is used, a heat treatment is performed directly for the hardening of the liquid resin. In this manner, the hardening of the liquid resin varies in processing depending on the type of the resin. Thus, where a photosensitive resin is exposed to radiation, a molding die made of, for example, quartz is used as the molding die 10 from the viewpoint of allowing the radiation such as ultraviolet radiation to pass through the molding die 10. Where a polyimide resin is subjected to a heat treatment, a molding die made of, for example, quartz, resin such as polymethyl methacrylate, or metal is used as the molding die 10.

The manufacturing method of an optical waveguide according to the present invention is carried out, for example, in a manner to be described below with using the liquid resin for the formation of the over cladding layer 4 and the molding die 10.

Specifically, the substrate 1 of a flat shape (see Fig. 1(a)) is first prepared. The substrate 1 is not particularly limited. Examples of a material for the formation of the substrate 1 include resin, glass, silicone and metal. Examples of the resin include polyethylene terephthalate, polyethylene naphthalate and polyimide. Examples of the metal include stainless steel. The thickness of the substrate 1 is not particularly limited, but is generally set in the range of 50 µm to 200 µm.

Next, the under cladding layer 2 is formed on a predetermined region of the surface of the substrate 1, as shown in Fig. 1(a). Examples of a material for the formation of the under cladding layer 2 include photosensitive resin, polyimide resin and epoxy resin. The formation of the under cladding layer 2 is accomplished in a manner to be described below. Specifically, a varnish prepared by dissolving the resin in a solvent is first applied onto the substrate 1. The application of the varnish is carried out, for example, by a spin coating method, a dipping method, a casting method, an injection method or an ink jet method. Next, the varnish is hardened. For this hardening, the material for the formation of the under cladding layer 2 is exposed to radiation through a photomask formed with an opening pattern corresponding to a desired shape of the under cladding layer 2 when a photosensitive resin is used as the material for the formation of the under cladding layer 2. Thus exposed portion will later serve as the under cladding layer 2. Where a polyimide resin is used as the material for the formation of the under cladding layer 2, the material for the formation of the under cladding layer 2 is generally hardened by a heat treatment at 300 to 400°C for 60 to 180 minutes. The thickness of the under cladding layer 2 is generally set in the range of 5 µm to 50 µm. In this manner, the under cladding layer 2 is produced.

Next, as shown in Fig. 1(b), the core 3 is formed on the surface of the under cladding layer 2. A material for the formation of the core 3 is typically a photosensitive resin. The material for the formation of the core 3 used herein is a material having a refractive index greater than that of the materials for the formation of the under cladding layer 2 and the over cladding layer 4 (see Fig. 1 (e)) to be described later. The refractive index may be adjusted, for example, by properly selecting the types of the materials for the formation of the under cladding layer 2, the core 3 and the over cladding layer 4, and adjusting the composition ratio thereof. The formation of the core 3 is accomplished in a manner to be described below. Specifically, a varnish prepared by dissolving the photosensitive resin in a solvent is first applied onto the under cladding layer 2 in a manner similar to that described above. The application of the varnish is carried out, for example, by a spin coating method, a dipping method, a casting method, an injection method or an ink jet method in a manner similar to that described above. Next, the varnish is dried to form a resin layer. The drying is generally performed by a heat treatment at 50 to 120°C for 10 to 30 minutes.

Then, the resin layer is exposed to radiation through a photomask (not shown) formed with an opening pattern corresponding to a desired pattern of the core 3. The exposed portion will be formed into the core 3 after the steps of dissolving and removing an unexposed portion. This will be described in detail. Examples of the radiation for exposure used herein include visible light, ultraviolet radiation, infrared radiation, X-rays, alpha rays, beta rays and gamma rays. Preferably, ultraviolet radiation is used. This is because the use of ultraviolet radiation achieves irradiation with large energy to provide a high rate of hardening, and an irradiation apparatus therefor is small in size and inexpensive to achieve the reduction in manufacturing cost. A light source of the ultraviolet radiation may be, for example, a low-pressure mercury-vapor lamp, a high-pressure mercury-vapor lamp, or an ultra-high-pressure mercury-vapor lamp. The dose of the ultraviolet light is generally 10 mJ/cm² to 10000 mJ/cm ² preferably 50 mJ/cm² to 3000 mJ/cm².

After the exposure, a heat treatment is performed to complete a photoreaction. The heat treatment is performed at 80 to 250°C, preferably at 100 to 200°C, for 10 seconds to two hours, preferably for five minutes to one hour. Thereafter, development is performed using a developing solution to dissolve and remove the unexposed portion of the resin layer, thereby forming the remaining resin layer into a pattern of the core 3. Exemplary methods to be employed for the development include an immersion method, a spray method and a puddle method. Examples of the developing solution to be used include an organic solvent and an organic solvent containing an alkaline aqueous solution. The developing solution and the development conditions are selected as appropriate depending on the composition of the photosensitive resin.

A heat treatment is performed to remove the developing solution remaining in the resin layer formed in the pattern of the core 3. In general, the heat treatment is performed at 80 to 120°C for 10 to 30 minutes. Thus, the remaining resin layer formed in the pattern of the core 3 is formed into the core 3. In general, the thickness of each core 3 is set in the range of 5 µm to 30 µm, and the width thereof is set in the range of 5 µm to 30 µm. Further, it is preferable to form a tip of each core 3 in a lens-shaped configuration in view of preventing the dispersion of light exiting the tip of each core 3, concentrating light incident on the tip of each core 3, thereby improving optical transmission efficiency.

According to the present invention, the over cladding layer 4 is formed (casted) in a manner shown in Figs. 1(c) and 1(d) after the foregoing steps. This is a striking feature of the present invention. Specifically, as shown in Fig. 1(c), the molding die 10 is prepared, and the open surface of the recessed portion 11 formed with the die surface 11a is brought into close contact with the surface of the under cladding layer 2. Then, the aforesaid liquid resin for the formation of the over cladding layer 4 is poured through the aforesaid through hole 12 formed in the molding die 10 into the mold space surrounded by the die surface 11a of the recessed portion 11 and the surface of the under cladding layer 2, so that the mold space is filled with the liquid resin. Next, a heat treatment is performed after exposure to radiation such as ultraviolet radiation through the molding die 10 where the liquid resin is a photosensitive resin, and a heat treatment is performed where the liquid resin is a polyimide resin. This causes the hardening of the liquid resin to thereby form the over cladding layer 4, as shown in Fig. 1(d). Then, as shown in Fig. 1(e), the die is removed, and the over cladding layer 4 is obtained in which a portion corresponding to the tip of the core 3 has a lens-shaped configuration (a curved surface) 4a. In general, the thickness of the over cladding layer 4 is set in the range of 50 µm to 2000 µm.

In this manner, the optical waveguide including the under cladding layer 2, the core 3, and the over cladding layer 4 formed on the surface of the substrate 1 is manufactured. In the formation of the over cladding layer 4 according to this manufacturing method, the liquid resin for the formation of the over cladding layer 4 is poured into the mold space surrounded by the die surface 11a of the recessed portion 11 and the surface of the under cladding layer 2, with the open surface of the recessed portion 11 of the molding die 10 being kept in close contact with the surface of the under cladding layer 2. This prevents the liquid resin from entering in-between the open surface of the recessed portion 11 of the molding die 10 and the surface of the under cladding layer 2, which avoids the occurrence of flash on the edge of the over cladding layer 4. Additionally, the formation of the over cladding layer 4 is accomplished by die-molding, which involves a smaller number of processing steps and results in the reduction in manufacturing cost, as compared with the formation of the over cladding layer 4 using a photosensitive resin.

When the optical waveguide is used, the substrate 1 may be separated from the under cladding layer 2 or be used together with the optical waveguide without being separated.

In the preferred embodiment, the portion of the over cladding layer 4 corresponding to the tip of the core 3 is formed in the lens-shaped configuration (the curved surface) 4a. The present invention, however, is not limited to this. The portion of the over cladding layer 4 corresponding to the tip of the core 3 may be formed in a non-lens-shaped configuration such as a planar surface and the like.

Next, an example will be described. It should be noted that the present invention is not limited to the example.

### EXAMPLE

### Materials for Formation of Under Cladding Layer and Over Cladding Layer

Materials for the formation of an under cladding layer and an over cladding layer (having a viscosity of 1000 mPa·s) were prepared by mixing together 35 parts by weight of bisphenoxyethanolfluorene diglycidyl ether (component A), 40 parts by weight of 3',4'-Epoxycyclohexylmethyl 3,4-Epoxycyclohexane carboxylate which is an alicyclic epoxy resin (CELLOXIDE 2021P manufactured by Daicel Chemical Industries, Ltd.) (component B), 25 parts by weight of (3',4'-Epoxycyclohexane)methyl 3',4'-Epoxycyclohexyl-carboxylate (CELLOXIDE 2081 manufactured by Daicel Chemical Industries, Ltd.) (component C), and one part by weight of a 50% propione carbonate solution of 4,4-bis[ di(β-hydroxyethoxy)phenylsulfinio] phenylsulfide-bis-hexafluoroantimonate (photo-acid generator: component D).

### Material for Formation of Core

A material for the formation of a core was prepared by dissolving 70 parts by weight of the component A, 30 parts by weight of 1,3,3-trist{4-[2-(3-oxetanyl)]butoxyphenyl}butane, and 0.5 part by weight of the component D in 28 parts by weight of ethyl lactate.

### Production of Optical Waveguide

First, the material for the formation of the under cladding layer was applied onto the surface of a polyethylene naphthalate film [a substrate: 100 mm x 100 mm x 100 µm (thickness)] by a spin coating method. Thereafter, exposure to ultraviolet radiation at 2000 mJ/cm² was performed through a photomask formed with an opening pattern identical in shape with the to-be-formed under cladding layer. Subsequently, a heat treatment was performed at 100°C for 15 minutes to form the under cladding layer. The thickness of the under cladding layer was 20 µm when measured with a contact-type film thickness meter.

The material for the formation of the core was applied onto the surface of the under cladding layer by a spin coating method. Thereafter, a drying process was performed at 100°C for 15 minutes. Next, a synthetic silica photomask formed with an opening pattern identical in shape with a core pattern was placed over the material for the formation of the core. Then, exposure to ultraviolet radiation at 4000 mJ/cm² was performed by a contact exposure method from above the photomask. Thereafter, a heat treatment was performed at 120°C for 15 minutes. Next, development was carried out using an aqueous solution of γ-butyrolactone to dissolve and remove an unexposed portion. Thereafter, a heat treatment was performed at 120°C for 30 minutes to form the core. The dimensions of each formed core in cross section were 12 µm in width x 24 µm in height when measured with an SEM.

A molding die (having a thickness of 2.3 mm and a through hole with a 60 mm x 200 mm rectangular opening) made of quartz for the formation of the over cladding layer was prepared, and an open surface of a recessed portion formed with a die surface was brought into close contact with the surface of the under cladding layer. The material for the formation of the over cladding layer (a liquid resin) was poured through the through hole formed in the molding die into a mold space surrounded by the die surface of the recessed portion and the surface of the under cladding layer, so that the mold space is filled with the liquid resin. Next, exposure to ultraviolet radiation at 2000 mJ/cm² was performed through the molding die. Thereafter, a heat treatment was performed at 120°C for 15 minutes. By this, the over cladding layer was formed, in which a portion corresponding to a tip of the core had a lens-shaped configuration. Thereafter, the die was removed. The thickness of the over cladding layer was 500 µm (a thickness as measured from the surface of the under cladding layer) when measured with a contact-type film thickness meter.

In this manner, an optical waveguide including the under cladding layers, the core, and the over cladding layer stacked sequentially in this order on the substrate was manufactured. In this optical waveguide, there was no flash produced on the edge of the over cladding layer on the surface of the under cladding layer.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. A method of manufacturing an optical waveguide comprising the steps of:
forming a core in a pattern on a surface of an under cladding layer; and
forming an over cladding layer on a surface of the core by coating,
said step of forming said over cladding layer including the steps of
preparing a molding die formed with a recessed portion having a die surface conformable in shape to a surface of the over cladding layer and a through hole in communication with said recessed portion;
bringing an open surface of said recessed portion of the molding die into close contact with said surface of the under cladding layer;
while keeping this state, pouring a liquid resin which is a material for the formation of said over cladding layer through said through hole into a mold space surrounded by said die surface of the recessed portion and the surface of the under cladding layer; and
hardening the liquid resin.

2. The method of manufacturing the optical waveguide according to claim 1, wherein a portion of said die surface of the recessed portion of the molding die corresponding to a tip of the core is configured in the form of a lens-shaped curved surface.
